# EUROPEAN PATENT SPECIFICATION

(11) **EP 0 801 246 B1**
(45) Date of publication and mention of the grant of the patent: **24.10.2001**
(21) Application number: 97110121.7
(22) Date of filing: 22.06.1992
(51) Int. Cl.: F16D 55/36, F16D 65/16, F16D 65/12, F16D 65/847, F16D 66/00, F16D 66/02, B64C 25/40

(54) **Brake assembly**
Bremse
Frein

(30) Priority: 20.06.1991 US 719130; 31.03.1992 US 861419
(43) Date of publication of application: 15.10.1997
(62) Divisional of application: 92913381.7
(73) Proprietor: RANCOURT, Claude, Beauce County, Quebec G5Y 2E1 (CA); RANCOURT, Yvon, Beauce County, Quebec G5Y 2E1 (CA)
(72) Inventor: RANCOURT, Claude, Beauce County, Quebec G5Y 2E1 (CA); RANCOURT, Yvon, Beauce County, Quebec G5Y 2E1 (CA)
(74) Representative: Casalonga, Axel

(56) References cited:
- EP-A- 0 038 370
- EP-A- 0 341 404
- EP-A- 0 351 237
- DE-A- 1 555 186
- FR-A- 1 521 872
- FR-A- 2 404 150
- GB-A- 639 558
- GB-A- 677 248
- GB-A- 1 410 330
- US-A- 2 248 684
- US-A- 2 412 884
- US-A- 2 552 571
- US-A- 2 822 997
- US-A- 3 096 649
- US-A- 3 547 234
- US-A- 3 999 634
- US-A- 4 102 438
- US-A- 4 186 822
- US-A- 4 658 936

## Description

### TECHNICAL FIELD

The present invention relates to disc brakes and more particularly to improvements in large area contact disc brakes for larger vehicles such as trucks, tractor-trailer vehicles in addition to other large wheeled vehicles and aircrafts.

### BACKGROUND ART

Canadian Patents 1,112,189, issued November 10, 1981 and 1,140,486, issued February 1, 1983, and U.S. Patent 4,102,438, issued July 25, 1978, Yvon Rancourt, describe a disc brake for heavy road vehicles wherein the brake shoes are in contact with the much larger disc area, and a suitable brake cooling system is provided to cool the disc, thus making disc brakes practical for such vehicles. The present invention is an improvement over the above-mentioned patent.

There are braking systems available on various types of vehicles which include a positive mechanical brake of the type known as a fail-safe brake, that is, where the brakes are applied when pressure is released from the brakes. U.S. Patent 3,547,234, Cummins, December 15, 1970, describes a service brake for earthmoving trucks or tractors which includes a hydraulic brake system using a plurality of discs, and these discs are mechanically preloaded by a spring to provide a fail-safe brake. U.S. Patent 4,057,297, November 8, 1977, Beck et al, includes a brake system which has been preloaded by means of a spring, including the discs of the type described in the Cummins Patent. This pressurized air operated system uses a series of valves to modify the pressure exerted on the torque converter in order to avoid damage to the differential. This is a system that is utilized in very heavy machinery such as tractors, etc. These patents represent the state of the art in terms of fail-safe type brake systems using preloaded mechanical devices such as springs. The structures are complicated by the need to be adapted on heavy vehicles. What is required is a fail-safe type brake system of simple construction using pneumatic pressure for releasing the brakes (see for instance EP-0 038 370, in which a bladder is used to release the brakes) and utilizing a simple disc brake construction of the type described in the Rancourt Patent wherein the disc is mounted to the adapter sleeve of a wheel on the vehicle and the brake housing is mounted to the vehicle on a dead axle.

It is also recognized that a major problem with large contact-area annular disc brakes of the type described in the above patents is heat. Great strides in improving heat dissipation were achieved with the introduction of vaned discs as described in U.S. Patent 4,102,438. However, vented discs of the type described required a thicker disc to retain the same strength. It was found for instance that it was not possible to house more than one cast-iron vented disc in an in-wheel brake housing, thus reducing the flexibility of design of such brakes, especially were multiple discs might be an advantage.

Another problem which has had a serious social impact is brake failure due to wear. Presently, there is no known reliable brake wear gauge for determining the remaining life of a particular set of brakes linings on a truck vehicle. It is necessary to remove housing parts on the wheel in order to examine and measure the remaining thickness of the lining and the brake disc. Since such examination adds to the down time of the truck or tractor- trailer, the tendency of the operator or driver- operator is to delay such inspection, with sometimes disastrous results, often costing innocent lives in highway accidents due to failed brakes of such large vehicles.

### DISCLOSURE OF INVENTION

It is an aim of the present invention to provide a disc brake for heavy road vehicles which relies on mechanical means for applying or actuating the brakes.

It is a further aim of the present invention to provide automatic security in the event of a malfunction in the braking system.

It is a further aim of the present invention to provide a parking brake integrated with the disc brake assembly within the same housing in order to free up the axle.

It is a further aim of the present invention to provide a disc brake assembly which has a greater capacity to dissipate heat.

It is still a further aim of the present invention to provide a disc brake assembly which has an improved means for monitoring temperature and wear in a brake assembly.

It is a further aim of the present invention to provide an aircraft disc brake assembly which has means to rotate the wheels of an aircraft to provide rotation of the wheels before touch down so that the rate of rotation approximates the rate of rotation after touch down.

A construction in accordance with the present invention is disclosed in claim 1.

In this specification, parking or safety brakes means the mechanism which allows the brakes to be applied when the vehicle is not in use or a malfunction should occur in the operation of the service brakes. Active or service brakes refers to the mechanism which provides for the brakes to be applied directly by the operator to slow the vehicle when moving on to bring it to a halt. It is understood that vehicle includes aircraft.

### BRIEF DESCRIPTION OF THE DRAWINGS

Having thus generally described the nature of the invention, reference will now be made to the accompanying drawings, showing by way of illustration, a preferred embodiment thereof, and in which:
Fig. 1 is a fragmentary axial cross-section taken through a brake assembly in accordance with the present invention;
Fig. 2 is an enlarged fragmentary cross-section of a detail of the brake assembly;
Fig. 3 is a further fragmentary enlarged axial cross-section taken of a further detail of the brake assembly;
Fig. 4 is an enlarged fragmentary front elevation of the brake assembly;

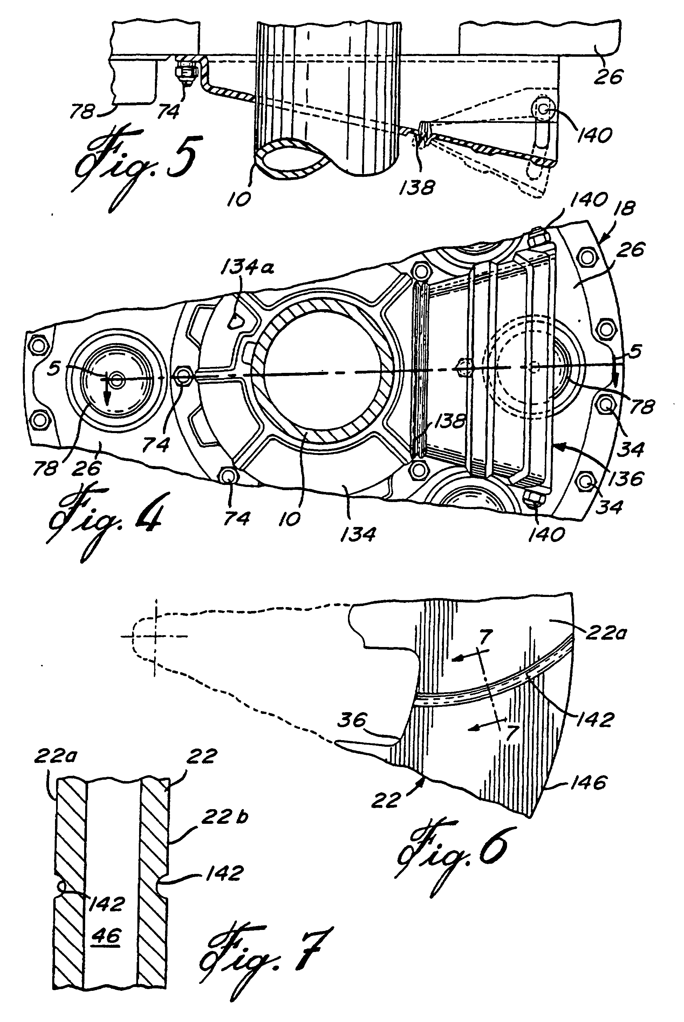

Fig. 5 is a horizontal cross-section taken along lines 5-5 of Fig. 4;
Fig. 6 is an enlarged fragmentary side elevation of a detail of the present invention;
Fig. 7 is an enlarged fragmentary vertical cross-section taken along lines 7-7 of Fig. 6;
Fig. 8 is an enlarged fragmentary cross-section of a detail shown in Fig.1.;
Fig. 9 is an enlarged fragmentary front elevation of the brake assembly with parts removed to view further details of the present invention;
Fig. 10 is a fragmentary axial section of another embodiment of a detail of the present invention;
Fig. 11 is an enlarged fragmentary axial section showing still another embodiment of the detail shown in Fig.10;
Fig. 12a is a schematic view of a spring disc which can be used in an embodiment of the present invention; and
Fig. 12b is a graph showing relative spring load characteristics of the spring disc.

### MODES FOR CARRYING OUT THE INVENTION

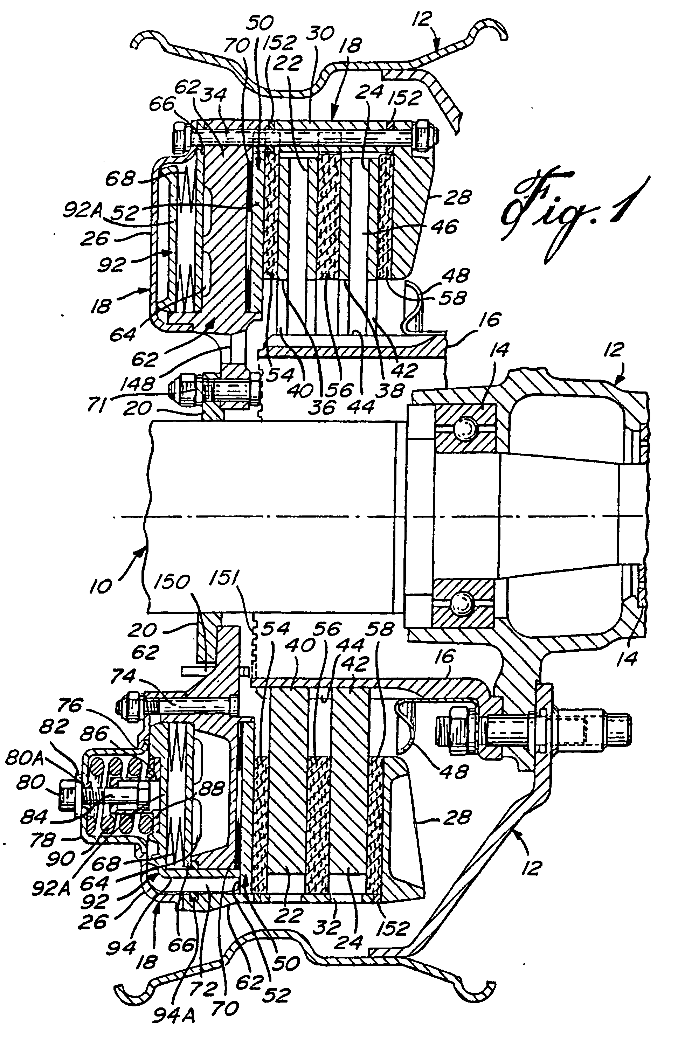

Referring to Figs. 1 to 3 the wheel assembly is shown with an axle 10. Axle 10 is a dead axle and bearings 14 mount the wheel 12 for rotation thereabout. An adapter sleeve 16 is mounted to the wheel 12 and extends concentrically over the axle 10 within the disc brake housing 18. A mounting ring 20 is fixed to the axle 10 and the housing 18 is mounted to the mounting ring 20. Two radial vented rotor discs 22 and 24 are shown within the housing 18. The housing 18 includes an annular housing wall 26 on the inboard side of the assembly, an annular housing wall 28 on the outboard side, and the whole is surrounded by a peripheral wall 30. Ventilation openings 32 are provided in the peripheral wall 30. Nut and bolt arrangements 34 secure the housing walls 26, 28, 30 and intermediate wall 62 together to form the housing 18.

The adapter sleeve 16 has axial splines 44 and the annular rotor brake discs 22 and 24 include disc openings 36 and 38 at the inner margins, respectively and the openings are interspersed with teeth 40 and 42. The teeth 40 and 42 engage the splines 44, thereby providing limited axial movement to the discs 22 and 24 while entraining the discs with the wheel 12.

Each brake disc 22 and 24 is provided with generally radial vent channels 46. It has been found that it is possible to maintain brake discs having vented channels within reasonable axial dimensions or thickness, by making the discs out of a composite of aluminum called "DURALCAN". Thus, it is possible to provide two or more brake discs in a space where only one vented cast iron brake disc was previously possible. The openings 36 and 38 of the discs 22 and 24 provide a ventilation passage as will be described later. An annular air deflector 48 is provided on adapter sleeve 16 in the plane of the housing wall 28.

The brake shoe 50 includes an annular backing plate 52 axially movable within the housing 18 to which is mounted a brake lining 54. The backing plate 52, brake lining 54, and annular brake lining 56 are provided with peripheral slots and teeth which engage between bolts 34 of the housing to restrain them from rotation but to allow them to slide axially. The brake lining 54 is adapted to frictionally engage the planar radial disc surface 22A. Annular brake lining 56 is provided between the discs 22 and 24 while annular brake lining 58 is mounted to the housing wall 28.

Annular spacing rings 152 are provided in the housing wall 30 and on the removal of the spacing rings 152 the housing will be reduced in axial dimension, thereby compensating for the wear on the linings 54, 56 and 58, and the wear on disc 22 and 24, as will be described later.

An intermediate wall 62 is mounted to the mounting ring 20 on the axle 10 by means of bolt and nut arrangements 71. Of course the intermediate wall 62 may be welded to mounting ring 20. The intermediate wall 62 also serves to support the housing wall 26, cylindrical wall 30, and housing wall 28 by means of the nut and bolt arrangements 74 and 34. Ventilation channels 64 are provided in the intermediate wall 62 while axial ventilation openings 148 are provided in spaced apart relationship near the inner opening of the annular intermediate wall 62.

In the present embodiment a plate 66 is placed against the intermediate wall 62 and is bolted thereto by means of nut and bolt arrangements 74 and 34 as shown. This plate 66 acts to support the bladder 68. Bladder 68 is an annular bladder made of stainless steel sheets, welded together as shown in Fig. 2. Air under pressure is fed to the bladder 68 through the tube 106 and inlet 108. Other gases may also be used to inflate the bladder. Stoppers (not shown) may be provided on the plate 66 adjacent the bladder 68 to prevent the bladder 68 from being crushed accidentally.

The spring abutment member 92 is mounted for axial movements relative to the intermediate wall 62. The spring abutment member 92 is in the form of a spider with legs 94 spaced about the periphery of an annular plate 92A and integral therewith. The legs 94 extend through openings 72 in the intermediate wall 62. Seals 94A are provided in the openings 72 surrounding the legs 94 in order to prevent dust, oil or other debris from entering anyfurther into the housing. The legs 94 engage the backing plate 52 near the peripheral edge thereof. In view of the stresses on the peripheral edge of the backing plate 52, the backing plate 52 may be constructed with a slight flare in the direction of the legs to compensate for the stresses which would apply when the legs 94 come into contact at the peripheral edge of the backing plate 52. The ends of legs 94 might also be provided with a slight beveled angle to compensate for such stresses.

Springs 90 urge the spring abutment plate 92 towards the brake shoe 50. A plurality of springs 90 are provided in annular spaced apart locations on the housing wall 26, each within a bell cover 78 fitted within a respective opening 76 on the wall 26. The bell covers 78, in one embodiment have a rotary bayonet type of connection to engage the housing wall 26 so that they can be removed in order to replace the springs 90 for instance. A nut 80 having a flange 82 is provided exteriorly of the bell cover 78. The nut 80 engages the threads of bolt 84. The head of the bolt 84 is in a blind sleeve 86 which has a flange 88 and which abuts the coil spring 90. Thus, if it is necessary to remove the tension of the springs 90 against the spring abutment plate 92 the nut 80 is rotated to point where the head of the bolt 84 moves the blind sleeve 86 towards the left in Fig. 1 thereby releasing the spring 90 from the spring abutment member 92. The nut 80 has a rivet shoulder 80A to retain the nut to the bell cover 78. Although a coil spring 90 is shown, other types of springs such as an annular disc spring may be used.

To provide a service brake, a bladder 70 is contemplated between the intermediate wall 62 and the backing plate 52 of brake shoe 50. The bladder 70 may be supplied with a gaseous fluid under pressure by an inlet similar to inlet 108 and tube 106.

During an emergency or parking brake mode, the springs 90 urge against the spring abutment plate 92 which in turn presses the legs 94 against the backing plate 52 of the brake shoe 50 to press the brake linings 54, 56 and 58 against the wear surfaces on the brake discs 22 and 24.

In other words, when the parking brakes or service brakes are applied, the pressure from the brake shoe assembly 50 moves the disc 22, brake lining 56 and disc 24 axially such that the friction surfaces 22a,b, 24a,b on discs 22, 24 frictionally engage the brake linings 54, 56 and 58.

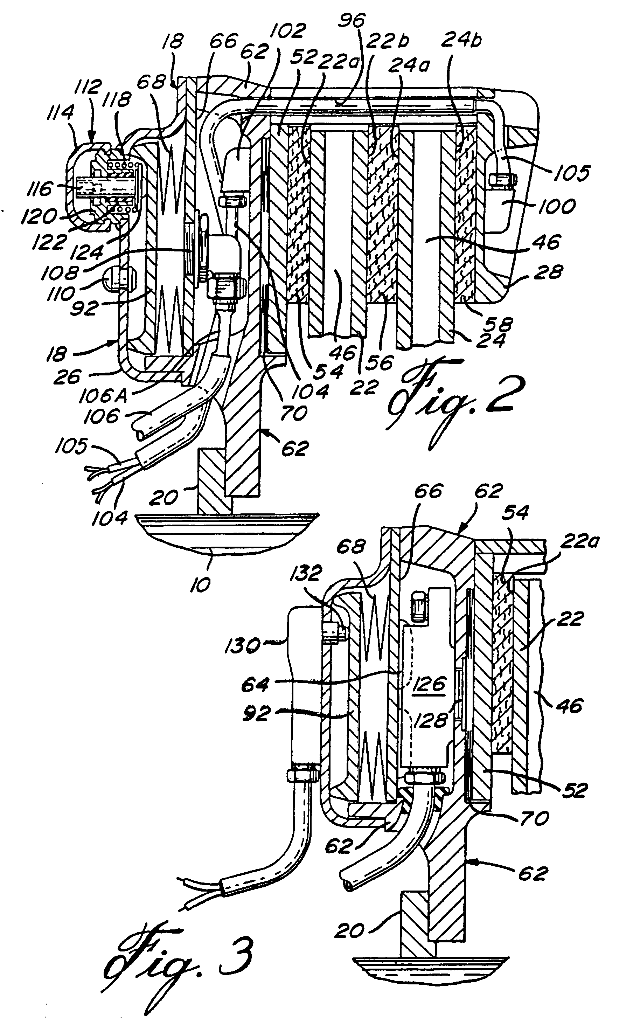

Thus, the springs 90 provide a safety brake, for the vehicle which would typically be a truck, tractor, or trailer. Once the truck or tractor is in operation, and the safety brakes are to be released, air pressure would be supplied to the bladder 68 by means of tube 106 and inlet 108, thereby expanding the bladder 68 to move the spring abutment member 92 axially to overcome the springs 90 and thus removing the pressure on the brake shoe 50, thereby allowing the discs 22 and 24 and thus the wheel to rotate freely. During the operation of the vehicle, when it is necessary to apply the active brakes, air pressure would be directed through inlet 128 (Fig.3) to the bladder 70 in order to move the brake shoe 50 axially to positively apply the brakes. At the same time, air pressure could be released from the bladder 68, if necessary, although it is contemplated that the safety brakes would normally be kept released during operation.

As a safety feature, if the air pressure was to fall under a predetermined level, the springs 90 would overcome the bladder 68 and cause the safety brakes to be applied.

A quick release valve 126 is located on the intermediate wall 62 and communicates with the bladder 70. The quick release valve 126 will operate when it is required to deflate the bladder 70. At the same time the exhaust from the quick release valve will be directed along the intermediate wall 62 through ventilation channels 64 thereby enabling the intermediate wall 62 to be cooled as well as the adjoining parts of the housing such as plate 66. The gas under pressure within the bladder 70 cools during decompression as it is released.

On the other hand a choke or restricted passage 106A is provided on the conduit 106 to provide a slow release from the bladder 68 in order to avoid sudden violent application of the safety brakes while the vehicle is moving if a service brake malfunction should occur. A time delay valve might also be provided instead of the choke.

It has been contemplated to interconnect the bladders 68 and 70 by suitable valves to allow air to pass from one bladder to the other in the event that it is desirable to apply the parking brakes and the service brakes simultaneously. However, in most cases, the bladders 68 and 70 would be operated independently.

The end edge of the sleeve 16 may be provided with teeth and an antilock-brake sensor or counter sensor 150 may be mounted to the intermediate wall 62 as shown in Fig. 1 for the purpose of sensing the movement of the teeth 151 as the adapter sleeve 16 rotates.

As shown in Fig. 2 the brake assembly is provided with a thermal sensor 102 connected to the intermediate wall 62 and having a lead 104. A thermal sensor 100 may be provided on the housing wall 28 with a lead 105 extending through a passage 96 provided for in the housing wall 30. The thermal sensors 100 and 102 can provide temperature data with respect to the heat generated in the disc brake assembly, particularly near the disc. For instance the sensor 100 is right at the housing wall 28 next to the brake lining 58 near the disc 24. The thermal sensor 102 will indicate the temperature of the intermediate wall 62. Other sensors may be provided. The sensors 100 and 102 communicate with a temperature indicator on the control panel in the vehicle. Only one wheel may need be monitored in such a manner as it will give an indication of the type of heat generated in all the wheels of the same vehicle.

A warning device, connected to the brake thermal sensors, may be provided on the control panel in the cab. The warning device may be an audible signal such as a buzzer or a recorded voice, or a visual diode graphic screen with different colours to provide information on the temperature of the brakes. As is well known when the temperature of the brakes reaches a certain temperature, the brake pads begin to break down chemically, causing brake fading. The warning device could alert the operator to stop the vehicle in order to allow the brakes to cool down before the brakes reach a temperature level that might cause failure.

Another feature provided in the brake assembly described herein is a wear sensor as shown in Figs. 2 and 3. Because of the particular axial movement of the present brake assembly a wear sensor can be provided between the housing wall 26 and the spring abutment member 92 and the distance between the two elements measured, particularly when the brakes are applied through the parking brakes under the urging of springs 90.

In one embodiment as shown in Fig. 2 the wear sensor 112 includes a rubber cap 114 and a plunger 116 urged by a spring 118 within a blind sleeve 120. A bearing sleeve 122 is provided within the sleeve 120 to allow the plunger to slide towards the spring abutment member 92 under the urging of the spring 118. The plunger is provided with a flange 124 to receive the spring 118.

Another form of wear sensor is shown in Fig. 3. Wear sensor 130 is an electronic sensor including a plunger 132, spring mounted within the sensor 130, and urged against the spring abutment member 92. Sensor 130 communicates with a brake wear indicator on the control panel in the cab. Only one wheel need be monitored as it give a reliable indicator of the amount of wear occurring at all the wheels of a vehicle.

A still further wear sensor could be provided by allowing an opening in the housing wall 26, closed by a rubber nipple 110. When the rubber nipple is removed a measuring gauge can be inserted to determine the distance between the wall 26 and the spring abutment member 92 when the parking brake is applied.

It is also contemplated to provide the brake sensors on the housing wall 28 so that the measurements can be taken against a backing plate associated with brake shoe 58 when the latter is made to move axially and the bladder 70 is mounted on the wall 28 (not shown). The service brake must be applied in order to take a proper reading.

With the use of the brake wear sensors or gauges a warning device can be provided on the control panel in the cab of the vehicle which would include an audible signal such as a buzzer when the brake linings and discs have been worn to a predetermined level to at least warn the operator to replace the brake linings and discs or at least plan the maintenance thereof. It may even be contemplated to provide an interlock which would intervene at the parking brake control valve to impede the release of the parking brakes when the brake wear has exceeded accepted levels of wear. In any event the brake wear system can give warning or control at different levels of brake wear.

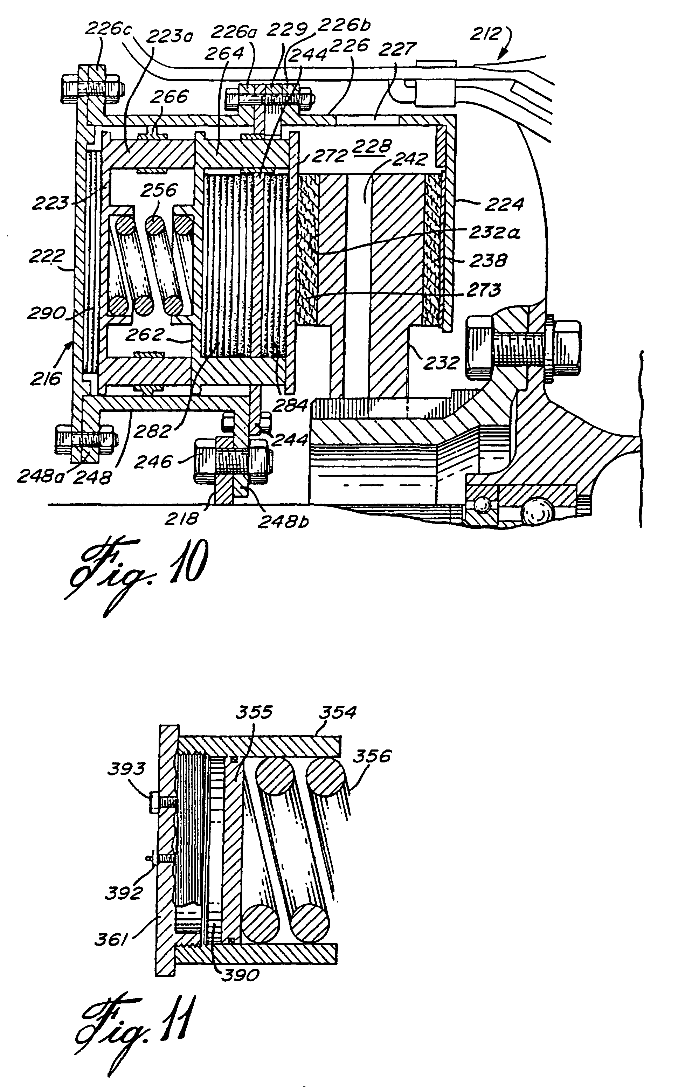

A ventilation system for the disc brakes is provided. As partially, previously described and shown in Figs. 1 and 9, openings 148 are located in the intermediate wall 62 and as shown in Fig. 4 a plenum 134, in the form of an annular cover, may be placed over the openings 148. The plenum 134 communicates with a scoop 136. The scoop 136 may be mounted on the housing wall 26 and would be facing the normal direction of travel of the vehicle so that air flow would be deflected into the plenum 134, through the openings 148 to the discs 22 and 24 and in particular through the openings 36 and 38. Because of deflector or baffle 48 the air would be forced upwardly through the ventilation channels 46 of the discs 22 and 24. The baffle 48 could be eliminated if the disc 24 is closed to the adapter sleeve 16. The discs 22 and 24 act as impellers creating a negative pressure in the area of the openings 36 and 38 thereby drawing air and pumping it to the periphery of the discs and exhausting it through the ventilation openings 32 allowing a great amount of heat to be dissipated in this way. The scoop 136 and the plenum 134 may be a molded plastic member with a hinge 138 molded therein along with nut and bolt adjustments 140 to open or reduce the opening of the scoop 136.

It has been contemplated to use this ventilation system for a different purpose, such as in an aircraft utilization. Accordingly, by providing a similar brake configuration on the wheels of the landing gear of an aircraft, that is with scoop 136, ventilation openings 32 and ventilated discs 22 and 24, a considerable flow of air can be passed through the (released) brakes ventilation system causing the wheels to rotate. It is particularly useful to have the wheels rotating at an equivalent ground speed, at the moment of landing. In order to control the rate of rotation of the wheels, that is so that they do not overrotate, the scoop 136 may be remotely adjusted and the active brakes could be applied. The wheel speed may be calibrated to the ground speed of the aircraft using a microprocessor using information from the counter sensor 150 and the aircraft ground speed data. The precise rate of rotation could be achieved by having the microprocessor modulate the scoop opening and the brakes to compensate for the excess of torque generated by the air flow through the brakes. This would be an important safety factor with respect to aircraft tires.

A fragment of a brake disc 22 is shown in Figs. 6 and 7 with the surfaces 22A and 22B illustrated. A groove 142 extends somewhat radially of the surfaces 22A and 22B and has a semi-circular cross-section. In a specific example, the groove may be 0.09" in depth with a width of 0.25" and a radius of 1/8 of an inch. It has been found that the provision of such a groove allows air to enter, when the brakes are released and the discs are rotating, to form a slight air cushion between the brake linings and the friction surface on the disc, thereby eliminating dragging and helping to cool the friction surfaces. At the same time the groove allows the brake surfaces to be cleaned by providing a drainage channel for any liquid forming on the brake linings or debris between the friction surface of the disc and the linings.

It has also been found that by providing a coating on the disc brake surface the heat is more easily dissipated. This coating may be a ceramic with aluminum particulates mixed therein and which has a particular heat sink and wear resistance properties. The coating may also be titanium carbo-nitride or chromium carbide. A coating is presently being developed by "SERMATECH INTERNATIONAL INC." for military purposes.

It has also been contemplated to provide a spray mix where water is sprayed into the plenum 134 through opening 134a to mix with ventilation air being deflected into the brake assembly to enhance the cooling of the brake assembly.

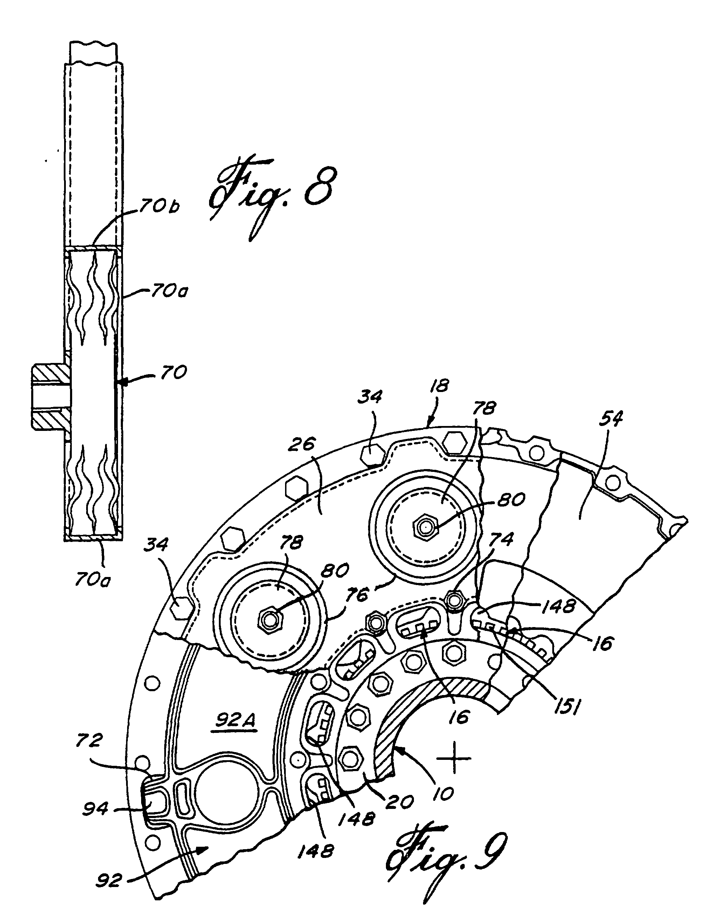

In the present embodiment, and as shown in Fig. 8, the bladder 70, which is in the form of an annular ring, is provided with an external annular dust cap 70a and an internal dust cap 70b. The dust caps 70a and 70b are provided to prevent debris from entering between the accordion like fins formed in the bellows-like bladder.

In the embodiment shown in Fig. 10, the bladder 290 adjusts the distance between lining 273 and friction surface 232a of disc 232, as will be described. In this embodiment, plate 223 is provided with integral posts 223a, which slide in bushings 266 mounted to the circumferential wall 226. The bushings 266 prevent posts 223a from jamming and thus plate 262 to slide parallel to intermediate wall 244. These posts 223a engage against the movable plate 262. Posts 264 extend from plate 262 to engage the backing plate 272.

A bladder 290 is provided between plate 223 and housing wall 222 which is bolted to the housing walls 226 and 248, as shown. The bladder 290 may be oil or grease filled. In either case, the increase of the volume in the bladder 290 will tend to distance the plate 223 from the wall 222, thereby moving the parking brake assembly including spring 256, spring abutment plate 262, posts 264, backing plate 272, and lining 273 closer to the disc 232. When the posts 223a have engaged the plate 262, the bladder 290 is used to compensate for brake disc or lining wear by pressing the plate 223 and posts 223a against the cage formed by plate 262 and posts 264.

As shown in Fig. 10, the bladders 282 and 284, which are operated by air pressure, can be controlled to either act as a positive force to apply the brakes, that is, when air pressure is increased in bladder 284 and bladder 282 is deflated, or to remove the brakes against the force of spring 256 by increasing the air pressure in bladder 282 and deflating bladder 284.

It is also contemplated that the bladders 70, 284, in Figs. 1 and 10 respectively, could be located between the housing walls 28, 224 and a backing plate for brake linings 58, 238.

Instead of the bladder 290, the compensation for brake wear could be provided by the compensating ring 229. Ring 229 is a segmental ring which can easily be removed from between intermediate wall 244 and flange 226b of housing wall 226. A compensating ring (not shown) may be provided between intermediate wall 244 and flanges 248b and 226a. The compensating ring 229 could also be placed between the housing wall 222 and the mounting flange 226c therefor. A compensating ring (not shown) would then be mounted between wall 222 and flange 248a. The idea is to allow for a decrease of the axial length of the housing 216 in order to compensate for wear of all parts of the braking system.

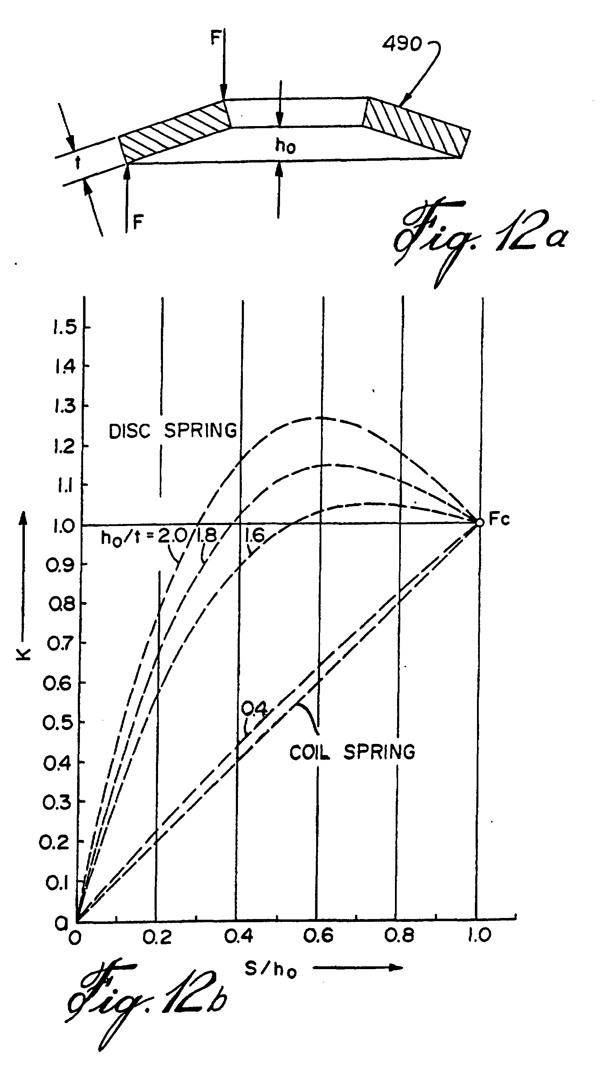

Fig. 11 shows an embodiment of the device for adjusting the spring length to increase the force against the brake shoes or for compensating for brake wear. In the embodiment shown, a grease nipple 392 in cap 361 can be utilized to insert grease or oil into the cavity 390 to displace the wall 355 in cylinder 354. When it is required to release the spring 356, the plug 393 can be released to allow the grease or oil to exit, thereby allowing the wall 355 to slide towards the cap 361.

In another embodiment, disc springs 490 could be used instead of coil springs 90,256,356. A single disc spring is illustrated in Fig. 12a and the characteristics thereof are shown in Fig. 12b. For a more ample description of the disc spring reference is made to the "Schnorr Handbook for Disc Springs" published 1983 by Adolf Schnorr GmbH & Co. KG, P.O. Box 60, D-7032 Sindelfingen 6, Germany. It has been found that by stacking disc springs in different configurations, different spring rates can be obtained.

One characteristic of the disc spring which is particularly useful in the present invention is that the full deflection spring load characteristic does not decrease until a large percentage of the spring deflection has occurred, i.e. approximately 50% to 70% when ho/t is larger than 1.6 and smaller than 2.0. The distance represented by the travel within these limits may represent the compensation for wear. With other spring characteristics the same travel, i.e. 50% to 70% would result in a significant reduction in the spring load characteristic as shown in Fig. 12b where
- ho: represents the formed height of an unloaded single disc in mm;
- t: represents the thickness of a single disc spring in mm;
- S: is the deflection in mm;
- K: = F/Fc;
- F: is the spring load;
- Fc: is the calculated load given by a single disc pressed flat.

## Claims

1. A ventilated disc brake assembly for a vehicle wheel (12) on a vehicle, wherein the wheel (12) includes a hub journaled (14) to an axle (10) on the vehicle, in use the disc brake assembly is within the confines of the wheel (12) and concentric with the axle (10), the disc brake assembly including an annular housing (18) in use mounted to the vehicle and at least an annular ventilated radial disc (22, 24) within the housing (18) and means (16) mounting the disc (22, 24) in use to the wheel (12), the disc (22, 24) having at least a first radial planar friction surface (22a), a first brake shoe (50) provided adjacent the first planar friction surface (22a) movable axially towards and away from the first friction surface (22a) of the disc (22, 24) for friction engagement therewith and release thereof, the first brake shoe being in the form of a radial annular plate having at least a planar surface to engage the first planar friction surface, means provided for restraining the first brake shoe (50) from rotating with the disc (22, 24), an annular intermediate wall member (62) mounted within the housing (18) and fixed thereto extending parallel with the radial disc (22, 24) and located such that the first brake shoe (50) moves axially between the intermediate wall (62) and the radial disc (22, 24), a movable spring abutment means (92) mounted for axial movement within the housing (18) between the intermediate wall (62) and a housing wall (26) such that the intermediate wall (62) is between the movable spring abutment means (92) and the first brake shoe (50), rigid pusher link members (94) extanding between the spring abutment means (92) and the first brake shoe (50) pass the intermediate wall (62) such that the first brake shoe (50) moves axially with the spring abutment means (92); a spring means (90) arranged in an annular array and extending between the housing wall (26) and the spring abutment means (92) such that the spring (90) urges against the spring abutment means (92) to press the first brake shoe (50) against the first friction surface (22a) of the disc (22, 24), a first annular, radially extending gaseous bladder (68) being provided between the intermediate wall (62) and the spring abutment means (92) whereby the first bladder (68), when expanded, forces the spring abutment means (92) to overoome the spring means (90) to release the first brake shoe (50) from the first friction surface (22a) of the disc (22, 24), and the housing being provided with conduit means for directing a cooling gas to the ventilated discs in order to dissipate heat therefrom.

2. A disc brake assembly as defined in claim 1, wherein the first brake shoe (50) includes a backing plate (52) mounting brake linings (54), the backing plate (52) extending parallel to the intermediate wall (62), lining (54) being adjacent to the first friction surfaca (22a) of radial disc (22, 24).

3. A disc brake assembly as defined in claim 1 or 2 wherein a second annular, radially extending, gaseous bladder (70) is provided between the brake shoe (50) and the intermediate wall (62) such that, when the active brakes are applied, fluid pressure is applied to expand the second bladder (70) so as to urge the first brake shoe (50) against the first friction surface (22a) of the disc (22, 24).

4. A disc brake assembly as defined in claim 1, wherein the radial disc (22, 24) is provided with a second radial friction surface (24b) on the other side of the disc (22, 24) relative to said first friction surface (22a) of the disc (22, 24), and a second annular, radially extending brake shoe (58) is mounted within the housing (18) adjacent the second friction surface (24b) of the disc (22,24), means are provided for restraining the second brake shoe (58) from rotation with the disc (22,24) and the means for mounting the disc (22,24) to the wheel includes an adapter sleeve (16) fixed to the wheel (12) and provided with axial splines (44) such that the disc (22,24) is capable of axial movement.

5. A disc brake assembly as defined in claim 1, wherein the intermediate wall member (62) and the housing (18) in use being mounted to a radial mounting ring (20) mounted to the axle (10).

6. A disc brake assembly as defined in claim 1, wherein the housing means (18) is an annular housing provided with a central axial opening through which the axle (10) extends therethrough, the housing (18) and the intermediate wall (62) in use being mounted to a mounting ring (20) in the from of an annular ring which is mounted to the axle (10), the disc mounting means includes an adapter sleeve (16) having axial splines (44), the disc (22,24) is an annular disc mounted on the axial splinas (44) of the adapter sleeve (16) which extends from the wheel (12) through a central opening (42) of the disc,

7. A disc brake assembly as defined in claim 1, wherein each spring (356) is received in a cylindrical sleeve (354) mounted in the housing wall and a piston (355) slides in the sleeve (354) and forms a cavity (390) with an end wall (361), and means (392) are provided for injecting a fluid within the cavity (390) to move the piston (355) and thus the spring (356) to compensate for wear on the brake shoe and the radial disc.

8. A disc brake assembly as defined in claim 1, wherein a piston (223) is slidable within the housing (216) and an expandable bladder (290) is provided in the housing (216) between the piston (223) and the wall (222), means are provided for supplying fluid into the bladder (290) to expand the distance between the wall (222) and the piston (223) to move the spring abutment means (262) axially such that rigid pusher link members (264) extending between the spring abutment (262) and backing plate (272) passing by intermediate wall (244), push the backing plate (272) axially to compensate the wear of disc (232) and lining (273, 238).

9. A disc brake assembly as defined in claim 1, wherein compensating means are provided in the form of a compensating ring (152, 229) supplementing the length of an axial cylindrical wall (30, 226) of the housing (18, 216), and when the compensating ring (152, 229) is removed from the cylindrical wall (30, 226), the axial length of the housing (12, 216) is reduced, thereby compensating for the wear on the brake shoe lining (54, 55, 58, 238, 273) and the disc (22, 24, 232).

10. A disc brake assembly as defined in claim 9, wherein the housing (216) includes an outer cylindrical, axially extending wall member (226) having a pair of integral radial flanges (226a, 226b) bolted together, and a compensating ring (229) between the flanges (226a, 226b) whereby, when it is required to reduce the axial length of the housing (216) to compensate for wear on the brake parts (238, 232, 273), the compensating ring (229) is removed from the flanges (226a, 226b) of the cylindrical wall (226), and the flanges (226a, 226b) are bolted together.

11. A disc brake assembly as defined in claims 1, 2 or 3, wherein the disc brake assembly comprises a first annular ventilated radial disc (22) having two radial planar friction surfaces (22a, 22b) and at least a second annular ventilated radial disc (24) having at least a first radial planar friction surface (24a), an annular brake lining (56) is provided between the radial discs (22, 24), and means are provided for restraining the brake lining (56) from rotating with the discs (22, 24) but allowing axial movement thereof and the means for mounting the radial discs (22, 24) includes an adapter sleeve (16) fixed to the wheel (12) and provided with axial spline (44) such that at least the first radial disc (22) is capable of axial movement.

12. A disc brake assembly as defined in claim 11, wherein the second radial disc (24) is provided with a second radial friction surface (24b) on the other side of the second radial disc (24) relative to the first friction surface (22a) of the first radial disc (22), and a second annular brake shoe (58) is mounted within the housing (18) adjacent the second friction surface (24b) of the disc (24), means are provided for restraining the second brake shoe (58) from rotation with the second radial disc (24) and the means for mounting the first and second radial disc (22, 24) to the wheel includes an adapter sleeve (16) fixed to the wheel (12) and provided with axial spline (44) such that the discs (22, 24) are capable of axial movement.

13. A disc brake assembly as defined in claims 4 or 12, wherein a second fluid bladder (70, 284) is provided between the second brake shoe (58, 238) and housing wall (28, 224), and means are provided for restraining the second brake shoe (58, 238) from rotating with the disc (22, 24) but allowing axial movement thereof such that, when the active brakes are applied, fluid pressure is applied to expand the second bladder (70) so as to urge one of the first and second brake shoe (50, 58) against a respective first and second friction surfaoe (22a, 24b) of the disc (22, 24).

14. A brake assembly as defined in claim 1, wherein temperature sensor (102) is provided on the intermediate wall (62) in order to determine the temperature of the brake assembly and means are provided for communicating the data.

15. A brake assembly as defined in claim 14, wherein in use, a warning device means is provided on a vehicle to warn the operator of the temperature of the brake assembly.

16. A brake assembly as defined in claim 1, 3 or 13, wherein dust caps (70a, 70b) are provided along the inner and outer margins of the first and second bladders (68,70).

17. A brake assembly as defined in claim 1, wherein the spring means (90) includes circumferentially spaced apart openings (76) defined on a housing wall (26), bell covers (78) provided, one in each opening (76), and a spring member (90) in each bell cover (78) extending between the bell cover (78) and the spring abutment means (92).

18. A brake assembly as defined in claim 17, wherein the bell cover (78) has a bayonet engagement with the housing wall (26) at each opening (75).

19. A brake assembly as defined in claims 1, 7 or 8, wherein the spring member (90, 256, 356) is a coil spring.

20. A brake assembly as defined in claim 8 or 9, wherein the spring member (90, 256, 356) is a disc spring.

21. A brake assembly as defined in claim 1, wherein a bell cover (78) is provided exteriorly with a nut (80) having a flange (82), the nut (80) engages the treads of a bolt (84), the head of the bolt (84) is in a blind sleeve (86), blind sleeve (86) is within the spring means (90) and has a flange (88) which abuts the spring means (90), such that, if it is necessary to remove the tension of the spring means (90) against the spring abutment means (92), the nut (80) is rotated to the point where the head of the bolt (84) press against the blind sleeve (86).

22. A brake assembly as defined in claim 1, wherein seal means (94A) are provided between each pusher link member (94) and the intermediate wall (62).

23. A brake assembly as defined in claim 20, wherein the quotien from the formed height dimension of an unloaded single disc divided by its thickness dimension is larger than 1.5.

24. A disc brake assembly as defined in claim 3, wherein, when fluid pressure is applied to expand the second bladder (70), means deflates the first bladder (58) such that the spring abutment means (92) urges against the first brake shoe (50) supplementing cats way the action of the second bladder.

25. A brake assembly as defined in claims 1, wherein the end of rigid pusher link members (94) are provided with a slight beveled angle.

26. A brake assembly as defined in claim 2, wherein the backing plate (52) is constructed with a slight flare in the direction of the rigid pusher link members (94).

## Patentansprüche

1. Belüftete Scheibenbremsenanordnung für ein Fahrzeugrad (12) an einem Fahrzeug, wobei das Rad (12) eine an einer Achse (10) am Fahrzeug zapfengelagerte Nabe (14) umfaßt, bei Verwendung die Scheibenbremsenanordnung innerhalb der Grenzen des Rads (12) liegt und mit der Achse (10) konzentrisch ist, wobei die Scheibenbremsenanordnung ein ringförmiges Gehäuse (18), welches bei Verwendung am Fahrzeug angebracht ist, und mindestens eine ringförmige belüftete Radialscheibe (22, 24) innerhalb des Gehäuses (18) und eine Einrichtung (16), welche die Scheibe (22, 24) bei Verwendung am Rad (12) anbringt, die Scheibe (22, 24) mit mindestens einer ersten radialen ebenen Reibfläche (22a), eine erste Bremsbacke (50), welche neben der ersten ebenen Reibfläche (22a) in Axialrichtung bewegbar hin zur ersten Reibfläche (22a) der Scheibe (22, 24) bzw. weg von der Reibfläche (22a) der Scheibe (22, 24) zum Reibeingriff damit bzw. zum Lösen davon vorgesehen ist, wobei die erste Bremsbacke in der Form einer radialen ringförmigen Platte mit mindestens einer ebenen Fläche zum Eingriff mit der ersten ebenen Reibfläche vorliegt, eine Einrichtung, welche vorgesehen ist, um die erste Bremsbacke (50) gegen eine Drehung mit der Scheibe (22, 24) zu sichern, ein ringförmiges Zwischenwandelement (62), welches innerhalb des Gehäuses (18) angebracht ist und, parallel zur Radialscheibe (22, 24) verlaufend, daran befestigt ist und derart angeordnet ist, daß die erste Bremsbacke (50) sich in Axialrichtung zwischen der Zwischenwand (62) und der Radialscheibe (22, 24) bewegt, eine bewegbare Federanschlageinrichtung (92), welche zur Axialbewegung innerhalb des Gehäuses (18) zwischen der Zwischenwand (62) und einer Gehäusewand (26) angebracht ist, so daß die Zwischenwand (62) zwischen der bewegbaren Federanschlageinrichtung (92) und der ersten Bremsbacke (50) liegt, starre Schiebeverbindungselemente (94), welche zwischen der Federanschlageinrichtung (92) und der ersten Bremsbacke (50) verlaufen, sich durch die Zwischenwand (62) hindurch erstrecken, so daß die erste Bremsbacke (50) sich axial mit der Federanschlageinrichtung (92) bewegt; eine Federeinrichtung (90), welche in einer kreisförmigen Anordnung angeordnet ist und zwischen der Gehäusewand (26) und der Federanschlageinrichtung (92) verläuft, so daß die Feder (90) gegen die Federanschlageinrichtung (92) drückt und somit die erste Bremsbacke (50) gegen die erste Reibfläche (22a) der Scheibe (22, 24) gedrückt wird, wobei eine erste ringförmige, in Radialrichtung verlaufende Gasblase (68) zwischen der Zwischenwand (62) und der Federanschlageinrichtung (92) vorgesehen ist, wodurch die erste Gasblase (68), wenn sie sich ausdehnt, die Federanschlageinrichtung (92) drängt, die Federeinrichtung (90) zu überwinden, und sich somit die erste Bremsbacke (50) von der ersten Reibfläche (22a) der Scheibe (22, 24) löst, und wobei das Gehäuse mit einer Leitungseinrichtung versehen ist, welche ein Kühlgas zu den belüfteten Scheiben leitet, um Wärme davon abzuleiten, umfaßt.

2. Scheibenbremsenanordnung nach Anspruch 1, wobei die erste Bremsbacke (50) eine Grundplatte (52) umfaßt, auf welcher die Bremsbeläge (54) angebracht sind, wobei die Grundplatte (52) parallel zur Zwischenwand (62) verläuft und der Belag (54) neben der ersten Reibfläche (22a) der Radialscheibe (22, 24) angeordnet ist.

3. Scheibenbremsenanordnung nach Anspruch 1, wobei eine zweite ringförmige, in Radialrichtung verlaufende Gasblase (70) zwischen der Bremsbacke (50) und der Zwischenwand (62) vorgesehen ist, so daß, wenn die aktiven Bremsen angewandt werden, ein Flüssigkeitsdruck angewandt wird und sich somit die zweite Blase (70) ausdehnt und die erste Bremsbacke (50) gegen die erste Reibfläche (22a) der Scheibe (22, 24) drückt.

4. Scheibenbremsenanordnung nach Anspruch 1, wobei die Radialscheibe (22, 24) mit einer zweiten Radialreibfläche (24b) auf der anderen Seite der Scheibe (22, 24) relativ zur ersten Reibfläche (22a) der Scheibe (22, 24) versehen ist und eine zweite ringförmige, in Radialrichtung verlaufende Bremsbacke (58) innerhalb des Gehäuses (18) neben der zweiten Reibfläche (24b) der Scheibe (22, 24) angebracht ist, eine Einrichtung zum Sichern der zweiten Bremsbacke (58) gegen eine Drehung mit der Scheibe (22, 24) vorgesehen ist und die Einrichtung zur Anbringung der Scheibe (22, 24) am Rad eine Spannhülse (16) umfaßt, welche am Rad (12) befestigt und mit Axialkeilnuten (44) versehen ist, so daß die Scheibe (22, 24) zu einer Axialbewegung fähig ist.

5. Scheibenbremsenanordnung nach Anspruch 1, wobei das Zwischenwandelement (62) und das Gehäuse (18) bei Verwendung an einem Radialanbringungsring (20) angebracht sind, welcher an der Achse (10) angebracht ist.

6. Scheibenbremsenanordnung nach Anspruch 1, wobei die Gehäuseeinrichtung (18) ein ringförmiges Gehäuse ist, welches mit einer mittigen Axialöffnung versehen ist, durch welche hindurch die Achse (10) verläuft, wobei das Gehäuse (18) und die Mittelwand (62) in Verwendung an einem Anbringungsring (20) in der Form eines ringförmigen Rings angebracht sind, welcher an der Achse (10) angebracht ist, die Scheibenanbringungseinrichtung eine Spannhülse (16) mit Axialkeilnuten (44) umfaßt, die Scheibe (22, 24) eine ringförmige Scheibe ist, welche an den Axialkeilnuten (44) der Spannhülse (16) angebracht ist, die sich ausgehend vom Rad (12) durch eine mittige Öffnung (42) der Scheibe erstreckt.

7. Scheibenbremsenanordnung nach Anspruch 1, wobei jede Feder (356) in einer zylindrischen Hülse (354) aufgenommen ist, welche in der Gehäusewand angebracht ist, und ein Kolben (355) in der Hülse (354) gleitet und einen Hohlraum (390) mit der Stirnwand (361) bildet, und eine Einrichtung (392) zur Einspritzung einer Flüssigkeit in den Hohlraum (390) vorgesehen ist, um den Kolben (355) und somit die Feder (356) zu bewegen und einen Verschleiß auf der Bremsbacke und der Radialscheibe auszugleichen.

8. Scheibenbremsenanordnung nach Anspruch 1, wobei ein Kolben (216) und eine ausdehnbare Blase (290) im Gehäuse (216) zwischen dem Kolben (223) und der Wand (222) vorgesehen ist, eine Einrichtung zum Zuführen einer Flüssigkeit in die Blase (290) vorgesehen ist, um den Abstand zwischen der Wand (222) und dem Kolben (223) zu vergrößern und somit die Federanschlageinrichtung (262) in Axialrichtung zu bewegen, so daß starre Schiebeverbindungselemente (264), welche zwischen der Federanschlageinrichtung (262) und der Grundplatte (272) durch eine Zwischenwand (244) hindurch verlaufen, die Grundplatte (272) in Axialrichtung drücken, um den Verschleiß einer Scheibe (232) und eines Belags (273, 238) auszugleichen.

9. Scheibenbremsenanordnung nach Anspruch 1, wobei eine Ausgleichseinrichtung in der Form eines Ausgleichsrings (152, 229) vorgesehen ist, welcher die Länge einer axialen zylindrischen Wand (30, 226) des Gehäuses (18, 216) ergänzt, und, wenn der Ausgleichsring (152, 229) von der zylindrischen Wand (30, 226) entfernt wird, die Axiallänge des Gehäuses (18, 216) verringert wird, wodurch der Verschleiß auf dem Bremsbackenbelag (54, 55, 58, 238, 273) und der Scheibe (22, 24, 232) ausgeglichen wird.

10. Scheibenbremsenanordnung nach Anspruch 9, wobei das Gehäuse (216) eine äußeres, zylindrisches, in Axialrichtung verlaufendes Wandelement (226) mit einem Paar von einstückigen Radialflanschen (226a, 226b), welche miteinander verschraubt sind, und einen Ausgleichsring (229) zwischen den Flanschen (226a, 226b) umfaßt, so daß, wenn es erforderlich ist, die Axiallänge des Gehäuses (216) zu verringern, um einen Verschleiß auf den Bremsenabschnitten (238, 232, 273) auszugleichen, der Ausgleichsring (229) von den Flanschen (226a, 226b) der zylindrischen Wand (226) weggenommen wird und die Flansche (226a, 226b) miteinander verschraubt werden.

11. Scheibenbremsenanordnung nach Anspruch 1, 2 oder 3, wobei die Scheibenbremsenanordnung eine erste ringförmige belüftete Radialscheibe (22) mit zwei radialen ebenen Reibflächen (22a, 22b) und mindestens eine zweite ringförmige belüftete Radialscheibe (24) mit mindestens einer ersten radialen ebenen Reibfläche (24a) umfaßt, ein ringförmiger Bremsbelag (56) zwischen den Radialscheiben (22, 24) vorgesehen ist und eine Einrichtung vorgesehen ist, welche den Bremsbelag (56) gegen eine Drehung mit den Scheiben (22, 24) sichert, jedoch dessen Axialbewegung zulässt, und die Einrichtung zur Anbringung der Radialscheiben (22, 24) eine Spannhülse (16) umfaßt, welche am Rad (12) befestigt ist und mit einer Axialkeilnut (44) versehen ist, so daß mindestens die erste Radialscheibe (22) zu einer Axialbewegung fähig ist.

12. Scheibenbremsenanordnung nach Anspruch 11, wobei die zweite Radialscheibe (24) mit einer zweiten radialen Reibfläche (24b) auf der anderen Seite der zweiten Radialscheibe (24) relativ zur ersten Reibfläche (22a) der ersten Radialscheibe (22) versehen ist und eine zweite ringförmige Bremsbacke (58) im Gehäuse (18) neben der zweiten Reibfläche (24b) der Scheibe (24) angebracht ist, eine Einrichtung zur Sicherung der zweiten Bremsbacke (58) gegen eine Drehung mit der zweiten Radialscheibe (24) vorgesehen ist und die Einrichtung zur Anbringung der ersten und zweiten Radialscheibe (22, 24) am Rad eine Spannhülse (16) umfaßt, welche am Rad (12) befestigt ist und mit einer Axialkeilnut (44) versehen ist, so daß die Radialscheiben (22, 24) zu einer Axialbewegung fähig sind.

13. Scheibenbremsenanordnung nach Anspruch 4 oder 12, wobei eine zweite Flüssigkeitsblase (70, 284) zwischen der zweiten Bremsbacke (58, 238) und einer Gehäusewand (28, 224) vorgesehen ist und eine Einrichtung vorgesehen ist, welche die zweite Bremsbacke (58, 238) gegen eine Drehung mit der Scheibe (22, 24) sichert, jedoch deren Axialbewegung zulässt, so daß, wenn die aktiven Bremsen angewandt werden, ein Flüssigkeitsdruck angewandt wird, um die zweite Blase (70) auszudehnen und somit die erste oder zweite Bremsbacke (50, 58) gegen eine jeweilige erste oder zweite Bremsfläche (22a, 24b) der Scheibe (22, 24) zu drücken.

14. Scheibenbremsenanordnung nach Anspruch 1, wobei ein Temperatursensor (102) an der Innenwand (62) vorgesehen ist, um die Temperatur der Bremsenanordnung zu bestimmen, und eine Einrichtung zur Übertragung der Daten vorgesehen ist.

15. Scheibenbremsenanordnung nach Anspruch 14, wobei bei Verwendung eine Wartvorrichtung an einem Fahrzeug vorgesehen ist, um den Benutzer hinsichtlich der Temperatur der Bremsenanordnung zu warnen.

16. Scheibenbremsenanordnung nach Anspruch 1, 3 oder 13, wobei Staubkappen (70a, 70b) längs der Innen- und Außenränder der ersten und zweiten Blasen (68, 70) vorgesehen ist.

17. Scheibenbremsenanordnung nach Anspruch 1, wobei die Federeinrichtung (90) in Umfangsrichtung in Abstand angeordnete Öffnungen (76), welche auf einer Gehäusewand (26) ausgebildet sind, Glockenabdeckungen (78), wobei in jeder Öffnung (76) eine vorgesehen ist, und ein Federelement (90) in jeder Glockenabdeckung (78), welches zwischen der Glockenabdeckung (78) und der Federanschlageinrichtung (92) verläuft, umfaßt.

18. Scheibenbremsenanordnung nach Anspruch 17, wobei die Glockenabdeckung (78) einen Bajonetteingriff mit der Gehäusewand (26) an jeder Öffnung (75) aufweist.

19. Scheibenbremsenanordnung nach Anspruch 1, 7 oder 8 wobei das Federelement (90, 256, 356) eine Schraubenfeder ist.

20. Scheibenbremsenanordnung nach Anspruch 8 oder 9 wobei das Federelement (90, 256, 356) eine Tellerfeder ist.

21. Scheibenbremsenanordnung nach Anspruch 1, wobei die Glockenabdeckung (78) außen mit einer Mutter (80) mit einem Flansch (82) versehen ist, die Mutter (80) mit dem Gewinde einer Schraube (84) in Eingriff ist, der Kopf der Schraube (84) sich in einer Blindhülse (86) befindet, und die Blindhülse (86) sich innerhalb der Federeinrichtung (90) befindet und einen Flansch (88) aufweist, welcher gegen die Federeinrichtung (90) anschlägt, so daß, wenn es erforderlich ist, die Zugspannung der Federeinrichtung (90) gegen die Federanschlageinrichtung (92) zu entfernen, die Mutter (80) zu dem Punkt gedreht wird, an welchem der Kopf der Schraube (84) gegen die Blindhülse (86) drückt.

22. Scheibenbremsenanordnung nach Anspruch 1, wobei eine Dichtungseinrichtung (94A) zwischen dem Schiebeverbindungselement (94) und der Zwischenwand (62) vorgesehen ist.

23. Scheibenbremsenanordnung nach Anspruch 20, wobei der Quotient, gebildet aus dem cebildeten Höhenmaß einer unbelasteten einzelnen Scheibe, geteilt durch deren Dickenmaß, größer als 1,5 ist.

24. Scheibenbremsenanordnung nach Anspruch 3, wobei, wenn der Flüssigkeitsdruck angewandt wird, um die zweite Blase (70) auszudehnen, eine Einrichtung die erste Blase (58) entleert, so daß die Federanschlageinrichtung (92) gegen die erste Bremsbacke (50) drückt, so daß auf diese Weise die Wirkung der zweiten Blase ergänzt wird.

25. Scheibenbremsenanordnung nach Anspruch 1, wobei das Ende der starren Schiebeverbindungselemente (94) mit einem leichten Abschrägungswinkel versehen ist.

26. Scheibenbremsenanordnung nach Anspruch 2, wobei die Grundplatte (52) mit einer leichten Ausbauchung in der Richtung der starren Schiebeverbindungselemente (94) ausgebildet ist.

## Revendications

1. Ensemble de frein à disque ventilé pour une roue (12) de véhicule sur un véhicule, dans lequel la roue (12) comprend un moyeu monté de façon à tourner (14) sur un essieu (10) du véhicule, en utilisation l'ensemble de frein à disque est dans les limites du contour de la roue (12) et concentrique à l'essieu (10), l'ensemble de frein à disque comprenant un carter annulaire (18), qui en utilisation est monté sur le véhicule, et au moins un disque radial annulaire ventilé (22, 24) à l'intérieur du carter (18) et un moyen (16) montant le disque (22, 24), en utilisation, sur la roue, le disque (22, 24) comportant au moins une première surface de frottement radiale plane (22a), un premier patin de frein (50) placé en position adjacente à la première surface de frottement plane (22a) et mobile axialement de façon à s'approcher et s'éloigner de la première surface de frottement (22a) du disque (22, 24) afin de coopérer par frottement avec celle-ci et de s'en dégager, le premier patin de frein étant sous la forme d'une plaque annulaire radiale ayant au moins une surface plane pour coopérer avec la première surface de frottement plane, un moyen prévu pour empêcher le premier patin de frein (50) de tourner avec le disque (22, 24), une paroi annulaire intermédiaire (62) montée à l'intérieur du carter (18) et fixée à celui-ci en s'étendant parallèlement au disque radial (22, 24) et positionnée de telle sorte que le premier patin de frein (50) se déplace axialement entre la paroi intermédiaire (62) et le disque radial (22, 24), un moyen mobile (92) d'appui d'élément élastique monté en vue d'un déplacement axial à l'intérieur du carter (18) entre la paroi intermédiaire (62) et une paroi de carter (26) de telle sorte que la paroi intermédiaire (62) se trouve entre le moyen mobile (92) d'appui d'élément élastique et le premier patin de frein (50), des éléments rigides formant tiges de poussée (94) s'étendant entre le moyen (92) d'appui d'élément élastique et le premier patin de frein (50) en dépassant de la paroi intermédiaire (62) de telle sorte que le premier patin de frein (50) se déplace axialement avec le moyen (92) d'appui d'élément élastique; un moyen élastique (90) agencé en un réseau annulaire et s'étendant entre la paroi de carter (26) et le moyen (92) d'appui d'élément élastique de telle sorte que le moyen élastique (90) exerce une poussée contre le moyen (92) d'appui d'élément élastique pour presser le premier patin de frein (50) contre la première surface de frottement (22a) du disque (22, 24), une première vessie annulaire (68) à gaz, s'étendant radialement, étant prévue entre la paroi intermédiaire (62) et le moyen (92) d'appui d'élément élastique, grâce à quoi la première vessie (68), lorsqu'elle se dilate, force le moyen (92) d'appui d'élément élastique à contrecarrer le moyen élastique (90) afin que le premier patin de frein (50) se dégage de la première surface de frottement (22a) du disque (22, 24), et le carter étant pourvu d'une conduite destinée à diriger un gaz de refroidissement sur les disques ventilés pour en dissiper la chaleur.

2. Ensemble de frein à disque selon la revendication 1, dans lequel le premier patin de frein (50) comprend une plaque d'appui (52) supportant des garnitures (54) de frein, la plaque d'appui (52) s'étendant parallèlement à la paroi intermédiaire (62), la garniture (54) étant adjacente à la première surface de frottement (22a) du disque radial (22, 24).

3. Ensemble de frein à disque selon la revendication 1 ou 2, dans lequel une deuxième vessie annulaire (70) à gaz, s'étendant radialement, est disposée entre le patin de frein (50) et la paroi intermédiaire (62) de telle sorte que, lorsque les freins actifs sont serrés, la pression du fluide est appliquée de manière à dilater la deuxième vessie (70) afin de pousser le premier patin de frein (50) contre la première surface de frottement (22a) du disque (22, 24).

4. Ensemble de frein à disque selon la revendication 1, dans lequel le disque radial (22, 24) est pourvu d'une deuxième surface de frottement radiale (24b) sur l'autre côté du disque (22, 24) par rapport à ladite première surface de frottement (22a) du disque (22, 24), et un deuxième patin de frein (58), annulaire et s'étendant radialement, est monté à l'intérieur du carter (18) de façon adjacente à la deuxième surface de frottement (24b) du disque (22, 24), des moyens sont prévus pour empêcher le deuxième patin de frein (58) de tourner avec le disque (22, 24) et le moyen servant au montage du disque (22, 24) sur la roue comprend un manchon adaptateur (16) fixé à la roue (12) et pourvu de cannelures axiales (44) de telle sorte que le disque (22, 24) puisse effectuer un déplacement axial.

5. Ensemble de frein à disque selon la revendication 1, dans lequel l'élément formant paroi intermédiaire (62) et le carter (18) en utilisation sont montés sur une bague de montage radiale (20) montée sur l'essieu (10).

6. Ensemble de frein à disque selon la revendication 1, dans lequel le carter (18) est un carter annulaire pourvu d'une ouverture centrale axiale à travers laquelle s'étend l'essieu (10) d'un côté à l'autre de celle-ci, le carter (18) et la paroi intermédiaire (62) étant montés, en utilisation, sur une bague de montage (20) sous la forme d'une bague annulaire qui est montée sur l'essieu (10), le moyen de montage de disque comprend un manchon adaptateur (16) comportant des cannelures axiales (44), le disque (22, 24) est un disque annulaire monté sur les cannelures axiales (44) du manchon adaptateur (16) qui s'étend depuis la roue (12) à travers une ouverture centrale (42) du disque.

7. Ensemble de frein à disque selon la revendication 1, dans lequel chaque moyen élastique (356) est reçu dans un manchon cylindrique (354) monté dans la paroi de carter et un piston (355) coulisse dans le manchon (354) et forme une cavité (390) avec une paroi d'extrémité (361), et des moyens (392) sont prévus pour injecter un fluide à l'intérieur de la cavité (390) pour déplacer le piston (355) et donc le moyen élastique (356) pour compenser l'usure du patin de frein et du disque radial.

8. Ensemble de frein à disque selon la revendication 1, dans lequel un piston (223) peut coulisser à l'intérieur du carter (216) et une vessie dilatable (290) est prévue dans le carter (216) entre le piston (223) et la paroi (222), des moyens sont prévus pour envoyer du fluide dans la vessie (290) pour augmenter la distance entre la paroi (222) et le piston (223) pour déplacer le moyen (262) d'appui d'élément élastique axialement de telle sorte que des éléments rigides formant tiges de poussée (264) s'étendant entre le moyen (262) d'appui d'élément élastique et une plaque d'appui (272) passant par une paroi intermédiaire (244), poussent la plaque d'appui (272) axialement pour compenser l'usure du disque (232) et de la garniture (273, 238).

9. Ensemble de frein à disque selon la revendication 1, dans lequel des moyens de compensation sont prévus sous forme d'une bague de compensation (152, 229) qui complète la longueur d'une paroi cylindrique axiale (30, 226) du carter (18, 216), et lorsque la bague de compensation (152, 229) est retirée de la paroi cylindrique (30, 226), la longueur axiale du carter (18, 216) est réduite, compensant de ce fait l'usure de la garniture (54, 55, 58, 238, 273) de patin de frein et du disque (22, 24, 232).

10. Ensemble de frein à disque selon la revendication 9, dans lequel le carter (216) comprend un élément de paroi extérieure cylindrique (226) s'étendant axialement et comportant une paire de brides radiales intégrées (226a, 226b) boulonnées l'une à l'autre, et une bague de compensation (229) entre les brides (226a, 226b) grâce à quoi, lorsque l'on souhaite réduire la longueur axiale du carter (216) pour compenser l'usure des pièces du frein (238, 232, 273), on retire la bague de compensation (229) des brides (226a, 226b) de la paroi cylindrique (226), et l'on boulonne les brides (226a, 226b) l'une à l'autre.

11. Ensemble de frein à disque selon l'une quelconque des revendications 1 à 3, dans lequel l'ensemble de frein à disque comprend un premier disque annulaire radial ventilé (22) comportant deux surfaces de frottement radiales planes (22a, 22b) et au moins un deuxième disque annulaire radial ventilé (24) comportant au moins une première surface de frottement radiale (24a), une garniture annulaire (56) de frein est présente entre les disques radiaux (22, 24), et des moyens sont présents pour empêcher la garniture (56) de frein de tourner avec les disques (22, 24) tout en en permettant un déplacement axial et le moyen servant au montage des disques radiaux (22, 24) comprend un manchon adaptateur (16) fixé à la roue (12) et pourvu d'une cannelure axiale (44) de telle sorte qu'au moins le premier disque radial (22) peut effectuer un déplacement axial.

12. Ensemble de frein à disque selon la revendication 11, dans lequel le deuxième disque radial (24) est pourvu d'une deuxième surface de frottement radiale (24b) sur l'autre côté du deuxième disque radial (24) par rapport à la première surface de frottement (22a) du premier disque radial (22), et un deuxième patin annulaire (58) de frein est monté à l'intérieur du carter (18) de façon adjacente à la deuxième surface de frottement (24b) du disque (24), des moyens sont présents pour empêcher le deuxième patin (58) de frein de tourner avec le deuxième disque radial (24), et le moyen servant au montage des premier et deuxième disques radiaux (22, 24) sur la roue comprend un manchon adaptateur (16) fixé à la roue (12) et pourvu d'une cannelure axiale (44) telle que les disques (22, 24) peuvent effectuer un déplacement axial.

13. Ensemble de frein à disque selon la revendication 4 ou 12, dans lequel une deuxième vessie (70, 284) à fluide est prévue entre le deuxième patin (58, 238) de frein et la paroi de carter (28, 224), et des moyens sont présents pour empêcher le deuxième patin (58, 238) de frein de tourner avec le disque (22, 24) mais en permettant son déplacement axial de telle sorte que, lorsque les freins actifs sont serrés, la pression du fluide est appliquée de manière à dilater la deuxième vessie (70) afin de pousser un des premier et deuxième patin (50, 58) de frein contre une première et deuxième surface de frottement respective (22a, 24b) du disque (22, 24).

14. Ensemble de frein selon la revendication 1, dans lequel un capteur de température (102) est présent sur la paroi intermédiaire (62) afin de déterminer la température de l'ensemble de frein et des moyens sont prévus pour communiquer les données.

15. Ensemble de frein selon la revendication 14, dans lequel, en utilisation, un moyen formant dispositif d'alarme est présent sur un véhicule pour avertir l'opérateur de la température de l'ensemble de frein.

16. Ensemble de frein selon la revendication 3 ou 13, dans lequel des chapeaux anti-poussière (70a, 70b) sont prévus le long des parties marginales intérieures et extérieures des première et deuxième vessies (68, 70).

17. Ensemble de frein selon la revendication 1, dans lequel le moyen élastique (90) comprend des ouvertures (76) espacées les unes des autres dans le sens circonférentiel et formées dans une paroi (26) du carter, des couvercles (78) en forme de cloche présents, à raison d'un sur chaque ouverture (76), et un élément élastique (90) dans chaque couvercle (78) en forme de cloche s'étendant entre le couvercle (78) en forme de cloche et le moyen (92) d'appui d'élément élastique.

18. Ensemble de frein selon la revendication 17, dans lequel le couvercle (78) en forme de cloche est assemblé par un accouplement du type à baïonnette avec la paroi (26) du carter à chaque ouverture (75).

19. Ensemble de frein selon la revendication 1, 7 ou 8, dans lequel l'élément élastique (90, 256, 356) est un ressort hélicoïdal.

20. Ensemble de frein selon la revendication 8 ou 9, dans lequel l'élément élastique (90, 256, 356) est une rondelle élastique.

21. Ensemble de frein selon la revendication 1, dans lequel un couvercle (78) en forme de cloche est pourvu extérieurement d'un écrou (80) muni d'un rebord (82), cet écrou (80) étant vissé sur le filetage d'une vis (84), la tête de la vis (84) est un manchon borgne (86), le manchon borgne (86) se trouve dans le moyen élastique (90) et comporte un rebord (88) qui porte contre le moyen élastique (90) de telle sorte que s'il devient nécessaire d'éliminer la force exercée par le moyen élastique (90) sur le moyen (92) d'appui d'élément élastique, on fait tourner l'écrou (80) jusqu'au moment où la tête de la vis (84) exerce une pression sur le manchon borgne (86).

22. Ensemble de frein selon la revendication 1, dans lequel des moyens d'étanchéité (94A) sont présents entre chaque élément (94) formant tige de poussée et la paroi intermédiaire (62).

23. Ensemble de frein selon la revendication 20, dans lequel le quotient de la hauteur libre d'une rondelle unique non chargée par l'épaisseur de cette rondelle est supérieur à 1,5.

24. Ensemble de frein à disque selon la revendication 3, dans lequel, lorsque la pression du fluide est appliquée de manière à dilater la deuxième vessie (70), un moyen dégonfle la première vessie (58), de sorte que le moyen (92) d'appui d'élément élastique pousse le premier patin (50) de frein en supplément à l'action de la deuxième vessie.

25. Ensemble de frein selon selon la revendication 1, dans lequel l'extrémité des éléments formant tiges de poussée rigides (94) est légèrement chanfreinée.

26. Ensemble de frein selon la revendication 2, dans lequel la plaque d'appui (52) présente un léger évasement dans la direction des éléments formant tiges de poussée rigides (94).
